# EUROPEAN PATENT APPLICATION

(11) **EP 4 138 348 A1**
(43) Date of publication of application: **22.02.2023**
(21) Application number: 21788701.7
(22) Date of filing: 12.04.2021
(51) Int. Cl.: H04L 12/721

(54) **SEGMENT ROUTING HEADER COMPRESSION METHOD AND APPARATUS AND SERVICE PROCESSING METHOD AND APPARATUS**

(30) Priority: 13.04.2020 CN 202010285171
(71) Applicant: ZTE Corporation, Shenzhen, Guangdong 518057 (CN)
(72) Inventor: WEN, Jianzhong, Shenzhen, Guangdong 518057 (CN); LIU, Aihua, Shenzhen, Guangdong 518057 (CN); CHEN, Ran, Shenzhen, Guangdong 518057 (CN)
(74) Representative: Vossius & Partner Patentanwälte Rechtsanwälte mbB
(86) International application number: PCT/CN2021/086543
(87) International publication number: WO 2021/208843

(57) **Abstract**

The present disclosure provides a segment routing header compression method, including: configuring a compressed segment identifier or a non-compressed segment identifier for each node on a segment routing path, and configuring, for a critical node, a compressed segment identifier additionally having a function of performing segment identifier type conversion on the segment identifier to which Segments Left points; generating a segment list, the segment list including the configured compressed segment identifiers and the non-compressed segment identifiers; and generating a segment routing header of a service packet, the segment routing header of the service packet including the segment list and a routing type field for indicating a format of the segment routing header, wherein the format of the segment routing header matches a format of the compressed segment identifier. The present disclosure further provides a service processing method, a segment routing header compression apparatus, a service processing apparatus, a computer device and a computer-readable medium.

## Description

### CROSS-REFERENCE TO RELATED APPLICATIONS

The present application claims the priority of Chinese patent application No. 202010285171.9 filed on April 13, 2020, the contents of which are incorporated herein by reference in its entirety.

### FIELD

Embodiments of the present disclosure relate to the technical field of wireless communications, and specifically to a segment routing header compression method and apparatus, a service processing method and apparatus, a computer device and a computer readable medium.

### BACKGROUND

Segment Routing, SR, is a technology for implementing source routing. RFC8402 defines two standard SR mechanisms: Multi-Protocol Label Switching (MPLS) forwarding plane-based SR-MPLS and Internet Protocol Version 6 (IPv6) forwarding plane-based SRv6. SRv6 may be implemented directly based on a IPv6 extended routing header without adding additional encapsulation, realizing the unification of Internet Protocol, IP, forwarding and tunnel forwarding. Meanwhile, since SRv6 employs an Segment ID (SID) in a 128-bit format same as IPv6 address, and divides the SID into two parts, namely, Locator and Function, flexible network and service hybrid programming can be achieved, so SRv6 has been widely recognized by the industry.

However, in the SRv6 solution, a SID list composed of a series of 128-bit SIDs is employed to describe a service path, resulting in the problem of excessive packet header overhead. To solve this problem, the industry has proposed multiple Segment Routing Header (SRH) compression solutions, such as the uSID solution (draft-filsfils-spring-net-pgm-extension-srv6-usid-02), and an ordinary Compressed SID (C-SID) solution (draft-li-spring-compressed-srv6-np-00).

In the SRv6 solution, a forwarding node (Transit) only needs to process ordinary IPv6 forwarding, and an end node (Endpoint) needs to process the SRH header. However, in the above SRH header compression solution, all end nodes are required to use the compressed SID format (where the C-SID solution allows the last hop end node to use a non-compressed format, but does not allow an intermediate node to use a non-compressed format), that is, the end node participating in IPv6 packet forwarding must have the ability to support the compressed SID, which raises very high requirements for the SRH processing capability of the network nodes and the SID planning of the network, and limits the spread and application of SRv6 to a certain degree.

### SUMMARY

In a first aspect, embodiments of the present disclosure further provide a segment routing header compression method, including:
configuring a compressed segment identifier or a non-compressed segment identifier for each node on a segment routing path, and configuring, for a critical node in the segment routing path, a compressed segment identifier additionally having a function of performing segment identifier type conversion on the segment identifier to which Segments Left (SL) points, the critical node being a node configured with the compressed segment identifier among two adjacent nodes configured with different types of segment identifiers;
generating a segment list, the segment list including the configured compressed segment identifier and the configured non-compressed segment identifier;
generating a segment routing header of a service packet, wherein the segment routing header of the service packet includes the segment list and a routing type field for indicating a segment routing header format, and the segment routing header format matches a format of the compressed segment identifier.

In a second aspect, embodiments of the present disclosure further provide a service processing method applied to nodes of a segment routing path, each node on the segment routing path being configured with a compressed segment identifier or a non-compressed segment identifier, a critical node on the segment routing path being configured with a compressed segment identifier additionally having a function of performing segment identifier type conversion on the segment identifier to which the SL points, the critical node being a node configured with a compressed segment identifier among two adjacent nodes configured with different types of segment identifiers, the method including:
obtaining a segment list and a routing type field for indicating a segment routing header format from a segment routing header of the received service packet, the segment list including the configured compressed segment identifier and the configured non-compressed segment identifier;
processing a current segment identifier in the segment list, and modifying the SL according to the routing type field;
if the current node is the critical node, performing segment identifier type conversion on the segment identifier to which the SL points; and
forwarding the service packet to the next-hop node, the service packet carrying the type of the segment identifier to which the SL points.

In a third aspect, embodiments of the present disclosure further provide a segment routing header compression apparatus, including a configuration module, a first generation module and a second generation module, wherein
the configuration module is configured to configure a compressed segment identifier or a non-compressed segment identifier for each node on a segment routing path, and configure, for a critical node on the segment routing path, a compressed segment identifier additionally having a function of performing segment identifier type conversion on the segment identifier to which Segments Left (SL) points, the critical node being a node configured with the compressed segment identifier among two adjacent nodes configured with different types of segment identifiers;
the first generation module is configured to generate a segment list, the segment list including the configured compressed segment identifier and the configured non-compressed segment identifier;
the second generation module is configured to generate a segment routing header of a service packet, wherein the segment routing header of the service packet includes the segment list and a routing type field for indicating a segment routing header format, and the segment routing header format matches a format of the compressed segment identifier.

In a fourth aspect, embodiments of the present disclosure further provide a service processing apparatus applied to nodes of a segment routing path, each node on the segment routing path being configured with a compressed segment identifier or a non-compressed segment identifier, a critical node on the segment routing path being configured with a compressed segment identifier additionally having a function of performing segment identifier type conversion on the segment identifier to which the SL points, the critical node being a node configured with a compressed segment identifier among two adjacent nodes configured with different types of segment identifiers; and the service processing apparatus including an obtaining module, a processing module, a converting module and a forwarding module, wherein
the obtaining module is configured to obtain a segment list and a routing type field for indicating a segment routing header format from a segment routing header of the received service packet, the segment list including the configured compressed segment identifier and the configured non-compressed segment identifier;
the processing module is configured to process a current segment identifier in the segment list, and modify the SL according to the routing type field;
the converting module is configured to, if the current node is the critical node, convert segment identifier type of the segment identifier to which the SL points; and
the forwarding module is configured to forward the service packet to the next-hop node, the service packet carrying the type of the segment identifier to which the SL points.

In a fifth aspect, embodiments of the present disclosure further provide a computer device, including: one or more processors and a storage device; wherein one or more programs are stored on the storage device, and when executed by the one or more processors, cause the one or more processors to implement the segment routing header compression method or service processing method provided by the above embodiments.

In a sixth aspect, embodiments of the present disclosure further provide a computer-readable medium on which a computer program is stored, wherein the computer program, when executed, implements the segment routing header compression method or service processing method provided by the above embodiments.

### BRIEF DESCRIPTION OF THE DRAWINGS

FIG. 1 is a flowchart of a segment routing header compression method provided by an embodiment of the present disclosure;
FIG. 2 is a flowchart of a service processing method provided by an embodiment of the present disclosure;
FIG. 3 is a flowchart of modifying SL according to a routing type field according to an embodiment of the present disclosure;
FIG. 4 is a network topology diagram provided by a specific Embodiment 1 of the present disclosure;
FIG. 5 is a schematic structural diagram of the SRH in an A->Z service packet transmission direction provided by the specific Embodiment 1 of the present disclosure;
FIG. 6 is a schematic structural diagram of SRH in a Z->A service packet transmission direction provided by the specific Embodiment 1 of the present disclosure;
FIG. 7 is a schematic diagram of a service processing process in the A->Z service packet transmission direction provided by the specific Embodiment 1 of the present disclosure;
FIG. 8 is a schematic diagram of a service processing process in the Z->A service packet transmission direction provided by the specific Embodiment 1 of the present disclosure;
FIG. 9 is a network topology diagram provided by specific Embodiment 2 of the present disclosure;
FIG. 10 is a schematic structural diagram of the SRH_Ext in the A->Z service packet transmission direction provided by the specific Embodiment 2 of the present disclosure;
FIG. 11 is a schematic structural diagram of the SRH_Ext in the Z->A service packet transmission direction provided by the specific Embodiment 2 of the present disclosure;
FIG. 12 is a schematic diagram of a service processing process in the A->Z service packet transmission direction provided by the specific Embodiment 2 of the present disclosure;
FIG. 13 is a schematic diagram of a service processing process in the Z->A service packet transmission direction provided by the specific Embodiment 2 of the present disclosure;
FIG. 14 is a schematic structural diagram of the SRH in the A->Z service packet transmission direction provided by the specific Embodiment 3 of the present disclosure;
FIG. 15 is a schematic structural diagram of the SRH in the Z->A service packet transmission direction according to Embodiment 3 of the present disclosure;
FIG. 16 is a schematic diagram of a service processing process in the A->Z service packet transmission direction provided by the specific Embodiment 3 of the present disclosure;
FIG. 17 is a schematic diagram of a service processing process in the Z->A service packet transmission direction provided by specific Embodiment 3 of the present disclosure;
FIG. 18 is a schematic structural diagram of a segment routing header compression apparatus provided by an embodiment of the present disclosure;
FIG. 19 is a schematic structural diagram of a service processing apparatus provided by an embodiment of the present disclosure.

### DETAILED DESCRIPTION

Example embodiments are described more sufficiently hereinafter with reference to the accompanying drawings, but they may be embodied in different forms and should not be construed as being limited to the embodiments set forth herein. Rather, a purpose of providing these embodiments is to make the present disclosure thorough and complete, and enable those skilled in the art to sufficiently understand the scope of the present disclosure.

As used herein, the term "and/or" includes any of and all combinations of one or more of the associated listed items.

The terminology used herein is used to describe specific embodiments only and is not intended to limit the present disclosure. As used herein, the singular forms "a" and "the" are also intended to include at least one without excluding plural forms, unless the context clearly dictates otherwise. It will also be understood that when the terms "include" and/or "be made of" are used in the description, it is to indicate that there exist specific features, entirety, steps, operations, elements and/or components, but not to exclude the existence or addition of one or more other features, entirety, steps, operations, elements, components, and/or groups thereof.

Embodiments described herein may be described with reference to plan and/or cross-sectional views by virtue of ideal diagrams of the present disclosure. Accordingly, example illustrations may be modified according to manufacturing techniques and/or tolerances. Therefore, the embodiments of the disclosure are not limited to the embodiments shown in the drawings, but include embodiments modified based on configurations formed by manufacturing processes.

Unless otherwise defined, all terms (including technical and scientific terms) used herein have the same meaning as commonly understood by the ordinary skills in the art. It will also be understood that terms such as those defined in common dictionaries should be construed as having meanings consistent with their meanings in the context of the related art and the present disclosure, and will not be construed as having idealized or over-formal meanings, unless expressly so limited herein.

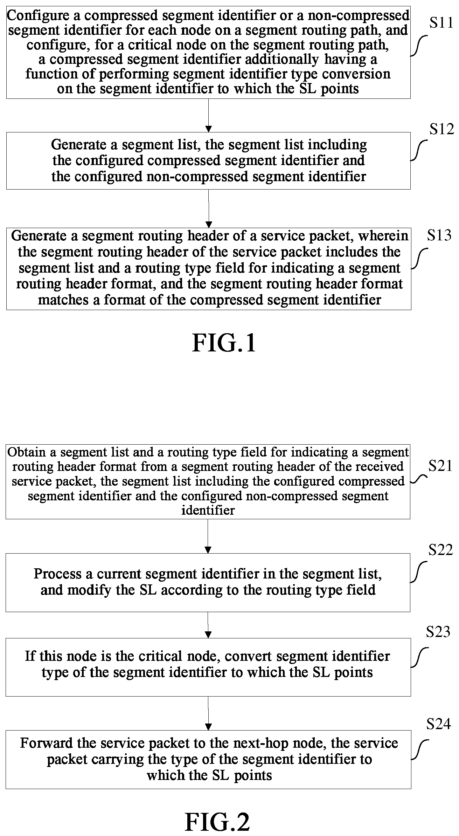

An embodiment of the present disclosure provides a segment routing header compression method. As shown in FIG. 1, the segment routing header compression method includes the following S11 through S13:
S11: configuring a compressed segment identifier or a non-compressed segment identifier for each node on a segment routing path, and configuring, for a critical node in the segment routing path, a compressed segment identifier additionally having a function of performing segment identifier type conversion on the segment identifier to which Segments Left (SL) points.

The critical node is a node configured with the compressed segment identifier among two adjacent nodes configured with different types of segment identifiers. In the embodiment of the present disclosure, the type of segment identifiers include compressed segment identifiers and non-compressed segment identifiers. For example, the segment routing path is node A-node B-node C, wherein the compressed segment identifier is configured for node A and node B, and the non-compressed segment identifier is configured for node C. The type of the segment identifiers of node B and node C are different, and the node B is configured with the compressed segment identifier. Consequently, the node B is the critical node in the segment routing path.

In this step, the segment routing header compression apparatus configures either the compressed segment identifier or the non-compressed segment identifier for each node on the segment routing path, and configures, for the critical node therein, the compressed segment identifier additionally having a function of performing segment identifier type conversion on segment identifiers to which Segments Left, i.e., SL, points. That is to say, there are two type of compressed segment identifiers: one type is compressed segment identifiers which are configured on non- critical nodes and can be implemented by using existing compressed segment identifiers; the other type is the compressed segment identifier which is configured on the critical node and has a function of performing segment identifier type conversion on segment identifiers to which SL points, for example, may be implemented by a function field defining the segment identifier.

After the segment routing header compression apparatus configures the compressed segment identifiers and the non-compressed segment identifiers to the corresponding nodes, each node may spread the compressed segment identifiers and the non-compressed segment identifiers to an entire SR domain through an Interior Gateway Protocol (IGP).

S12: generating a segment list, the segment list including the configured compressed segment identifier and the configured non-compressed segment identifier.

In this step, a source node of the segment routing path calculates and generates the segment list, and the segment list is pressed into the compressed segment identifiers or the non-compressed segment identifiers of respective nodes according to network programming needs. In the segment list, the segment identifiers of the nodes on the segment routing path are listed in an order of forwarding the service packets

S13: generating a segment routing header of a service packet, wherein the segment routing header of the service packet includes the segment list and a routing type field for indicating a segment routing header format, and the segment routing header format matches a format of the compressed segment identifier.

In this step, the segment list is carried in the segment routing header, SRH, of the service packet. The segment routing header of the service packet further includes a routing type field. The routing type field is used to indicate the segment routing header format. The segment routing header format matches the format of the compressed segment identifier, and modification manners of the SL defined by different segment routing header formats are different. The modification manners of the SL defined by different segment routing header formats will be described in detail later.

According to the segment routing header compression method provided by the embodiments of the present disclosure, each node on the segment routing path is configured with a compressed segment identifier or a non-compressed segment identifier, and the compressed segment identifier having a function of performing segment identifier type conversion on segment identifiers to which the number of SL points is additionally configured for the critical node, the critical node being a node configured with the compressed segment identifier among two adjacent nodes configured with different types of segment identifiers; a segment list including the configured compressed segment identifiers and non-compressed segment identifiers is generated; a segment routing header of a service packet is generated, wherein the segment routing header of the service packet includes the segment list and a routing type field for indicating a segment routing header format, and the segment routing header format matches a format of the compressed segment identifier. In the embodiment of the present disclosure, by performing the conversion of the segment identifier type and defining the segment routing header format matched with the format of the compressed segment identifier, it is possible to achieve hybrid networking and hybrid programming of the nodes configured with the compressed segment identifiers and nodes configured with non-compressed segment identifiers, so that the SRv6 is applicable to a more complex networking environment, which is conducive to quickly promoting the deployment of SRv6 on the existing network.

In some embodiments, the critical node is a node configured with a compressed segment identifier, and the next-hop node is a node configured with a non-compressed segment identifier. For example, the segment routing path is node A-node B-node C, and the service packet transmission path is A-B-C, wherein node A and node B are configured with compressed segment identifiers, node C is configured with the non-compressed segment identifier, and node B is the critical node. Correspondingly, the function of performing segment identifier type conversion on the segment identifier to which the SL points is a first conversion function, and the first conversion function is to convert the type of the segment identifier to which the SL points into the non-compressed segment identifiers.

In some embodiments, the critical node is a node configured with a compressed segment identifier, and the previous hop node is a node already configured with a non-compressed segment identifier. For example, the segment routing path is node A-node B-node C, and the service packet transmission path is C-B-A, wherein node A and node B are configured with compressed segment identifiers, node C is configured with the non-compressed segment identifier, and node B is the critical node. Correspondingly, the function of performing segment identifier type conversion on the segment identifier to which the SL points is a second conversion function, and the second conversion function is to convert the type of the segment identifier to which the SL points into the compressed segment identifiers.

In some embodiments, the segment routing header of the service packet may further include a Flag field for indicating the type of the segment identifier to which the SL points. For example, if a value of the Flag field is 1, this indicates the segment identifier to which the current SL points is a compressed segment identifier; if a value of the Flag field is 0, this indicates the segment identifier to which the current SL points is a non-compressed segment identifier.

The first conversion function includes modifying the value of the Flag field in the segment routing header of the received service packet to a value representing a non-compressed segment flag (i.e., Flag=0). That is to say, the first conversion function is defined as End.uzip, which is used to realize the conversion processing from the compressed segment identifier to the non-compressed segment identifier, and the content of the processing thereof includes: modifying the flag to change the SL to indicate the non-compressed segment identifier. It should be noted that the content of the processing of End.uzip may further include and End operation of the compressed segment identifier itself, wherein different compressed segment identifiers have different End operation schemes, that is, the embodiment of the present disclosure integrates compression schemes for different segment identifiers.

The second function includes modifying the value of the Flag field in the segment routing header of the received service packet to a value indicating the compressed segment identifier (i.e., Flag=1). That is to say, the second conversion function is defined as End.zip, which is used to realize the conversion processing from the non-compressed segment identifier to the compressed segment identifier, and the content of the processing thereof includes: modifying the flag to change the SL to indicate the compressed segment identifier. It should be noted that the content of the processing of End.zip may also include an End operation of the compressed segment identifier itself, wherein different compressed segment identifiers have different End operation schemes, that is, the embodiment of the present disclosure integrate compression schemes for different segment identifiers.

In some embodiments, the value of the routing type field is a first preset value, for example, Routing type=6. Correspondingly, the segment routing header of the service packet further includes an extension (SRH_Ext) field, and the extension field is used to indicate a first segment routing header format, and the following function is performed: after completion of the processing of a compressed segment identifier, decrementing the value of the SL by n, where n is a ratio of a length of the compressed segment identifier to a length of the supported shortest compressed segment identifier, n being a positive integer; and after completion of the processing of a non-compressed segment identifier, decrementing the value of the SL by m, where m is a ratio of a length of the non-compressed segment identifier to a length of the supported shortest compressed segment identifier, m being a positive integer.

That is to say, the segment routing header of the service packet may use a new field, which is defined as SRH_Ext. The SRH_Ext field may support hybrid programming of compressed segment identifiers and non-compressed segment identifiers, even programming of compressed segment identifiers with different lengths. At this time, the SL operation is redefined according to the shortest length of the compressed segment identifiers. For example, when the length of the supported shortest compressed segment identifier is 16 bits, the SRH_Ext field defines the following functions:
after completion of the processing of a 16-bit compressed segment identifier, decrementing the SL by 1 in the End operation;
after completion of the processing of a 32-bit compressed segment identifier, decrementing the SL by 2 in the End operation;
after completion of the processing of a 64-bit compressed segment identifier, decrementing the SL by 4 in the End operation; and
after completion of the processing of a non-compressed segment identifier (a non-compressed segment identifier having a length of 128 bits), decrementing the SL by 8 in the End operation.

In some embodiments, the value of the routing type field is a second preset value, for example, Routing type=4. At this time, the segment routing header continues to use the current routing type field, but needs to redefine the function of the routing type field, to be compatible with both compressed and non-compressed segment identifiers. Specifically, the routing type field is used to indicate a second segment routing header format, and the second segment routing header format includes: p compressed segment identifiers occupying bits with a length of t non-compressed segment identifiers, where t is a positive integer, p is a value obtained by rounding a ratio of a non-compressed segment identifier length to a compressed segment identifier length. If the total length of p compressed segment identifiers is less than the total length of t non-compressed segment identifiers, reserved bytes are used to pad a remaining length. Correspondingly, the routing type field is used to perform the following function: decrementing the SL by 1 after completion of the processing of all compressed segment identifiers within the length of a non-compressed segment identifier. It should be noted that the routing type field may also perform the following function according to the existing definition: decrementing the value of the SL by 1 after completion of the processing of a non-compressed segment identifier.

That is to say, when Routing type=4, the SL still indicates the number of segment identifiers within one non-compressed segment identifier length (128 bits). When the segment routing header of the service packet employs the compressed segment identifiers, it is necessary to combine a plurality of compressed segment identifiers together to occupy 128 bits. If an integer multiple of 128 bits cannot be occupied (the integer is t, and t is greater than or equal to 1), the reserved fields will be filled to make up the integer multiple of 128 bits. After the compressed segment identifiers are processed, and only when the processing of all compressed segment identifiers within a 128-bit is completed, will the SL be decremented by 1. After the processing of a non-compressed segment identifier is completed, the SL is decremented by 1 in the End operation.

When the compressed segment identifiers are processed, it is necessary to determine whether to modify the value of SL after judging whether the processing of all compressed segment identifiers in a 128-bit is completed.

In some embodiments, for example, the compressed segment identifier is compressed in a uSID (draft-filsfils-spring-net-pgm-extension-srv6-usid-02) manner. Correspondingly, the completion of the processing of all compressed segment identifiers within one non-compressed segment identifier length means that the bits after the currently-processed segment identifier in the segment list are all zero.

In some embodiments, for example, the compressed segment identifier is compressed in a C-SID (draft-li-spring-compressed-srv6-np-00) manner. Correspondingly, the segment routing header of the service packet or the segment list may also be configured with a counter (Sub_SL) field for recording a number of unprocessed compressed segment identifiers; whenever the processing of a compressed segment identifier is completed, the value of the counter field is decremented by 1, wherein an initial value of the counter field is p (where p is a value obtained by rounding a ratio of a non-compressed segment identifier length to a compressed segment identifier length). Correspondingly, the completion of the processing of all compressed segment identifiers within one non-compressed segment identifier length includes the value of the counter field being zero.

An embodiment of the present disclosure further provides a service processing method. The method is applied to nodes of a segment routing path, each node on the segment routing path is configured with a compressed segment identifier or a non-compressed segment identifier, and a critical node on the segment routing path is additionally configured with a compressed segment identifier having a function of performing segment identifier type conversion on the segment identifier to which the SL points, the critical node being a node configured with a compressed segment identifier among two adjacent nodes configured with different types of segment identifiers. As shown in FIG. 2, the service processing method includes:
S21: obtaining a segment list and a routing type field for indicating a segment routing header format from a segment routing header of the received service packet, the segment list including configured compressed segment identifiers and configured non-compressed segment identifiers.

Before forwarding the service packet, a segment routing header compression apparatus generates a segment list including compressed segment identifiers and non-compressed segment identifiers, and carries the segment list in the segment routing header of the service packet. In this step, after receiving the service packet sent by a previous hop node, a node on the segment routing path obtains the segment list from the segment routing header of the service packet, and obtains the routing type field for representing the segment routing header format.

S22: processing a current segment identifier in the segment list, and modifying the SL according to the routing type field.

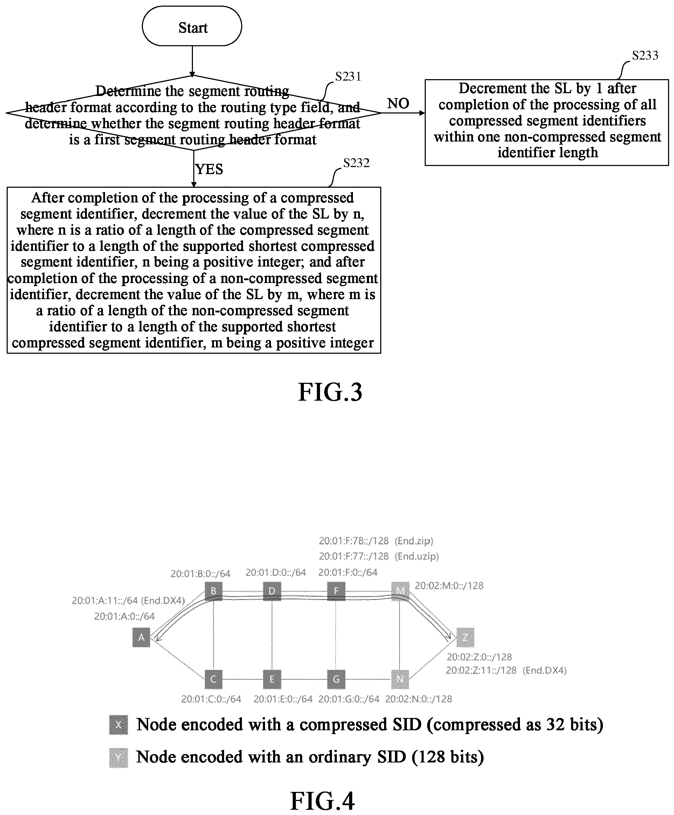

In this step, a service processing apparatus processes the current segment identifier in the segment list, the segment identifier being a compressed segment identifier or a non-compressed segment identifier. Manners of modifying the SL defined by different routing type after the processing of a segment identifier is completed are different, so it is necessary to determine the routing type, and modify the SL according to the routing type. The SL-modifying manners under different routing type will be described in detail with reference to FIG. 3.

S23: if the current node is the critical node, performing segment identifier type conversion on the segment identifier to which the SL points.

The segment identifier type include compressed segment identifier and non-compressed segment identifier. The segment identifier type conversion includes: converting the compressed segment identifier into the non-compressed segment identifier, or converting the non-compressed segment identifier into the compressed segment identifier.

It should be noted that if the node is a non-critical node, the function defined by the segment identifier (which may be the compressed segment identifier or the non-compressed segment identifier) configured at this node is executed, without performing segment identifier type conversion on the segment identifier to which the SL points.

S24: forwarding the service packet to the next-hop node, the service packet carrying the type of the segment identifier to which the SL points.

In this step, the service processing apparatus carries the converted segment identifier type obtained in S23 in the service packet, and forwards the service packet to the next-hop node.

According to the service processing method provided by the embodiment of the present disclosure, a segment list and a routing type field for indicating a segment routing header format are obtained from the segment routing header of the received service packet, the segment list including configured compressed segment identifiers and configured non-compressed segment identifiers; a current segment identifier in the segment list is processed, and the SL is modified according to the routing type field; if the current node is a critical node, segment identifier type of the segment identifier to which the SL points are converted; the service packet is forwarded to the next-hop node, the service packet carrying the type of the segment identifier to which the SL points. In the embodiment of the present disclosure, by performing at the critical node the conversion of the segment identifier type of segment identifier to which the SL points and modifying the SL according to the routing type field, it is possible to achieve hybrid networking and hybrid programming of nodes configured with the compressed segment identifiers and nodes configured with non-compressed segment identifiers, so that the SRv6 is applicable to a more complex networking environment, which is conducive to quickly promoting the deployment of SRv6 on the existing network.

In some embodiments, the critical node is a node configured with a compressed segment identifier, and the next-hop node is a node configured with a non-compressed segment identifier. Correspondingly, performing segment identifier type conversion on segment identifier to which the SL points (i.e., S23) includes: modifying the type of the segment identifier to which the SL points to the non-compressed segment identifier. That is to say, in the packet transmission direction, the previous-hop node of the critical node is a node configured with a compressed segment identifier, and the next-hop node of the critical node is a node configured with a non-compressed segment identifier.

In some embodiments, the critical node is a node configured with a compressed segment identifier, and the previous-hop node is a node configured with a non-compressed segment identifier. Correspondingly, performing segment identifier type conversion on the segment identifier to which the SL points (i.e., S23) includes: modifying the type of the segment identifier to which the SL points to the compressed segment identifier. That is to say, in the packet transmission direction, the previous-hop node of the critical node is a node configured with a non-compressed segment identifier, and the next-hop node of the critical node is a node configured with a compressed segment identifier.

In some embodiments, the function of the segment identifier type conversion on the segment identifier to which the SL points may be implemented by setting a Flag field. Specifically, the segment routing header of the service packet further includes a Flag field for indicating the segment identifier type of the segment identifier to which the SL points, and the segment identifier type includes a compressed segment identifier and a non-compressed segment identifier. For example, Flag=0 may be defined to indicate a non-compressed segment identifier, and Flag=1 to indicate a compressed segment identifier.

Correspondingly, in S23, before performing segment identifier type conversion on the segment identifier to which the SL points, the method further includes obtaining the Flag field from the segment routing header of the service packet.

Correspondingly, for a case where the critical node is a node configured the compressed segment identifier and the next-hop node is a node configured with the non-compressed segment identifier, the modifying the type of the segment identifiers to which the UL points to the non-compressed segment identifier includes: modifying a value of the Flag field to a value indicating the non-compressed segment identifier, for example, modifying the value of the Flag field to 0.

Correspondingly, for a case where the critical node is a node configured the compressed segment identifier and the previous-hop node is a node configured with the non-compressed segment identifier, the modifying the type of the segment identifiers to which the SL points to the compressed segment identifier includes: modifying the value of the Flag field to a value indicating the compressed segment identifier, for example, modifying the value of the Flag field to 1.

In the service packet forwarding process, after the processing of the segment identifier is completed, the SL needs to be modified. In the embodiment of the present disclosure, the segment routing header format is defined in the routing type field, and SL-modifying manners under different segment routing header are defined. The SL-modifying manners under different segment routing formats will be described in detail with reference to FIG. 3.

In some embodiments, as shown in FIG. 3, the modifying the SL according to the routing type field (i.e., S23) includes:
S231: determining the segment routing header format according to the routing type field, and performing S232 if the segment routing header format is a first segment routing header format; performing S233 if the segment routing header format is a second segment routing header format.

In some embodiments, the segment routing header format may be determined according to the value of the routing type field. If the value of the routing type field is a first preset value, it is determined that the segment routing header format is the first segment routing header format; if the value of the routing type field is a second preset value, it is determined that the segment routing header format is the second segment routing header format. For example, the first preset value may be 6, and the second preset value may be 4. When the value of the routing type field is the first preset value, this indicates that the segment routing header of the service packet further includes an extension (SRH_Ext) field, and the SL is modified in a manner defined by the SRH_Ext field. When the value of the routing type field is the second preset value, this indicates that the SL is still modified in the manner defined by the routing type field (the only thing is that the SL-modifying manner defined by the routing type field in the embodiment of the present disclosure is different from the SL-modifying manner in the prior art).

S232: after completion of the processing of the compressed segment identifier, decrementing a value of SL by n, where n is a ratio of a length of the compressed segment identifier to a length of the supported shortest compressed segment identifier, n being a positive integer; and after completion of the processing of a non-compressed segment identifier, decrementing the value of SL by m, where m is a ratio of a length of the non-compressed segment identifier to a length of the supported shortest compressed segment identifier, m being a positive integer.

In this step, when Routing type=6, the SL operation is redefined according to the shortest length of the compressed segment identifier. For example, when the supported shortest compressed segment identifier length is 16 bits, the SL is decremented by 1 (n=16/16=1) in the End operation after the completion of the processing of the 16-bit compressed segment identifier; the SL is decremented by 2 (n=32/16=2) in the End operation after the completion of the processing of the 32-bit compressed segment identifier; the SL is decremented by 4 (n=64/16=4) in the End operation after the completion of the processing of the 64-bit compressed segment identifier; and the SL is decremented by 8 (m=128/16=8) in the End operation after the completion of the processing of the 128-bit non-compressed segment identifier.

It should be noted that, in order to ensure the verification is correct, correspondingly, it is defined in a Last Entry field in the segment routing header that when verification, the SL should also be calculated according to the multiple of the supported shortest compressed segment length (for example, 16 bits).

In S233, the SL is decremented by 1 after the processing of all compressed segment identifier is completed within one non-compressed segment identifier length.

In the second segment routing header format, p compressed segment identifiers occupy bits with a length of t non-compressed segment identifier, where t is a positive integer, p is a value obtained by rounding a ratio of a non-compressed segment identifier length to a compressed segment identifier length. If the total length of the p compressed segment identifiers is less than the total length of the t non-compressed segment identifiers, reserved bytes are used to pad a remaining length. That is to say, when Routing type=4, SL still indicates the number of segment identifiers within one non-compressed segment identifier length (128 bits). When the segment routing header of the service packet employs the compressed segment identifiers, it is necessary to combine a plurality of compressed segment identifiers together to occupy 128 bits. If an integer multiple of 128 bits cannot be occupied (where the integer is t, and t is greater than or equal to 1), the reserved fields will be filled to make up the integer multiple of 128 bits. Correspondingly, after the processing of the compressed segment identifiers is completed, the SL is decremented by 1 only when the processing of all compressed segment identifiers in the 128 bits is completed.

It should be noted that, in this step, the value of the SL is decremented by 1 after the processing of a non-compressed segment identifier is completed.

In the embodiment of the present disclosure, when the compressed segment identifiers are processed, it is necessary to determine whether to modify the value of SL after judging whether the processing of all compressed segment identifiers in a 128-bit is completed.

In some embodiments, for example, for the compressed segment identifiers which are compressed in a uSID manner, whether the processing of all compressed segment identifiers in a 128-bit is completed may be judged by judging remaining bits. Correspondingly, the completion of the processing of all compressed segment identifiers within one non-compressed segment identifier length means that the bits after the currently-processed segment identifier in the segment list are all zero.

In some embodiments, for example, for the compressed segment identifiers which are compressed in a C-SID manner, whether the processing of all compressed segment identifiers in a128-bit is completed may be judged by providing a counter. Specifically, in the segment routing header of the service packet or the segment list, a counter (Sub_SL) field is provided for recording a number of unprocessed compressed segment identifiers; whenever the processing of a compressed segment identifier is completed, the value of Sub_SL is decremented by 1, where an initial value of the Sub_SL is p. Correspondingly, the completion of the processing of all compressed segment identifiers within one non-compressed segment identifier length includes the value of the counter field being zero.

It should be noted that the value of Sub_SL and the value of SL are not necessarily 0 at the same time. When the compressed segment identifier is processed, it is possible that SL is already 0, but Sub_SL is not 0. At this time, this means that the processing reaches the last 128-bit in the segment list, but there are still compressed segment identifiers that have not been processed, which should not be processed as the last hop.

In order to clearly describe the solutions of the embodiments of the present disclosure, the solutions of the embodiments of the present disclosure will be described in detail below by way of three specific examples.

### Embodiment 1

A networking topology of Embodiment 1 is as shown in FIG. 4. Currently, there is a VPN4 service. An A-B-D-F-M-Z SRv6 path needs to be created, and the path involves hybrid programming of compressed SID and non-compressed SID nodes. The A-G nodes are configured with 32-bit compressed segment identifiers, and compressed using the uSid compression scheme, a common prefix (uSID Block) of the compressed SIDs is 32 bits, and each compressed segment identifier is 32 bits. Therefore, after the uSID Block is removed from a 128-bit, the compressed SIDs of three SRv6 nodes may be represented. The nodes M, N and Z are configured with 128-bit non-compressed SIDs.

During the SRH compression process, the following definitions are made:
(1) Define Flag=1 in the SRH to indicate that the SID is currently a compressed SID, and define Flag=0 to indicate that the SID is currently a non-compressed SID.
(2) Define a first conversion function End.uzip (encoded as 0x77) of the critical node between the compressed SID and the non-compressed SID, to achieve the conversion of the type of the segment identifier to which the SL points from the compressed SID to the non-compressed SID. The code is as follows:

```
 If (SRH.Flag == 1)
 Set SRH.Flag=0
 Decrement SL by 1
 Update IPv6 DA with Segment_List[SL]
 Forward the packet to the new DA;
```

(3) Define a second conversion function End.zip (encoded as 0x78) of the critical node between the non-compressed SID and the compressed SID, to achieve the conversion of the type of the segment identifier to which the SL points from the non-compressed SID to the compressed SID. The code is as follows:

```
 If (SRH.Flag == 0)
 Set SRH.Flag=1
 Decrement SL by 1
 Update IPv6 DA with Segment_List[SL]
 Forward the packet to the new IPv6 DA.
```

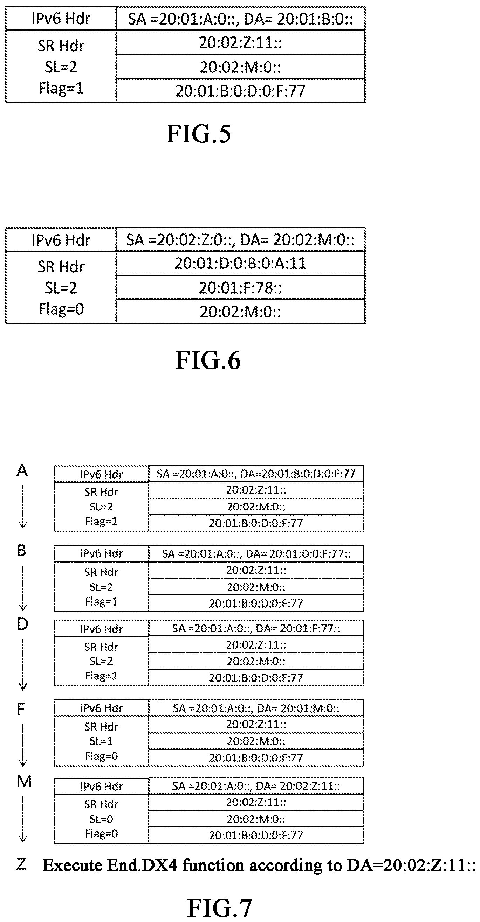

FIG. 5 is a structural schematic diagram of the SRH in an A->Z service packet transmission direction. At node A, the SRH shown in FIG. 5 is used to represent an A-B-D-F-M-Z VPN4 service forwarding path, wherein node F employs F:77 to indicate that End.uzip operation is to be executed to achieve the conversion from the compressed SID to the non-compressed SID.

FIG. 6 is a structural schematic diagram of the SRH in a Z->A service packet transmission direction. At the node Z, the SRH shown in FIG. 6 is used to represent a Z-M-F-D-B-A VPN4 service forwarding path, wherein node F is configured with a 128-bit non-compressed SID, and employs F:78 to indicate that the End.zip operation is to be executed to achieve the conversion from the non-compressed SID to the compressed SID.

In this specific embodiment 1, Routing type=4, indicating that the SRH format is the second segment routing header format, that is, the routing type field in the SRH is compatible with the existing SRH. In the End operation of the compressed SID, the SL is decremented by 1 when the processing all compressed SIDs in a 128-bit (that is, the compressed SID compressed by employing the uSID manner) is completed. The code is as follows:

```
 IF (SRH.Flag == 1)
 IF DA[64..95] != 0 //There are still uSIDs that have not been processed
 Copy DA[64..127] into DA[32..95]
 Set DA[96..127] to 0x0000
 Forward the packet to the new IPv6 DA
 [ELSE IF (DA[64..95] == 0) and SL>0 //the processing of all uSIDs in the
 current 128bit is completed, and compressed SIDs in the next 128bit are taken for processing
 Decrement SL by 1
 Update IPv6 DA with Segment_List[SL]
 Forward the packet to the new IPv6 DA
 ELSE
 Report error //if there is no next 128-bit, a service processing other
 than the End operation should be performed, with an error report.
```

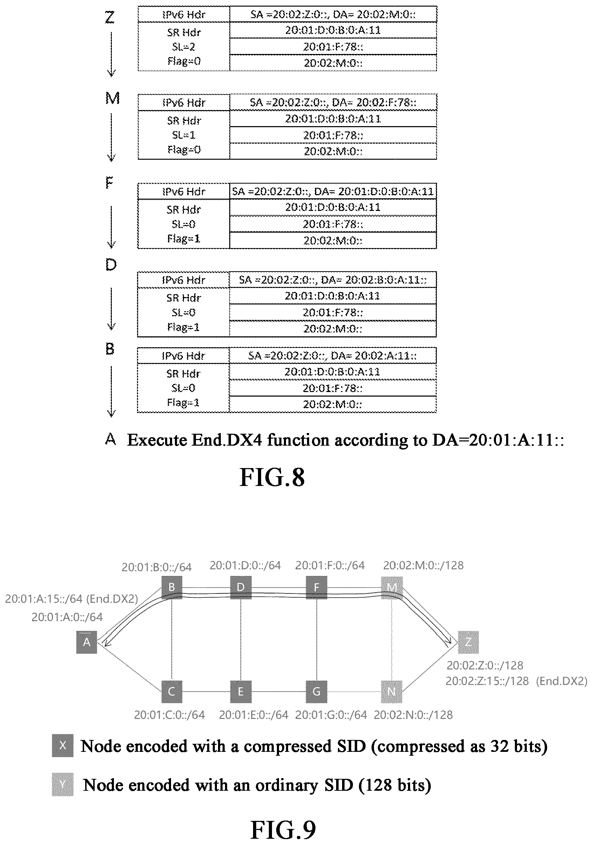

A service processing flow in the A->Z service packet transmission direction is shown in FIG. 7. The segment routing path is A-B-D-F-M-Z, and the function of End.DX4 is executed according to DA=20:02:Z:11::. A service processing flow in the Z->A service packet transmission direction is shown in FIG. 8. The segment routing path is Z-M-F-D-B-A, and the function of End.DX4 is executed according to DA=20:02:A:11::.

### Embodiment 2

A networking topology of Embodiment 2 is as shown in FIG. 9. Currently, there is a L2VPN service. An A-B-D-F-M-Z SRv6 path needs to be created, and the path involves hybrid programming of compressed SID and non-compressed SID nodes. The A-G nodes employ 32-bit compressed SIDs, and M, N, Z nodes are configured with 128-bit non-compressed SIDs. In this embodiment, the SRH is the second segment routing header format, that is, the newly-defined SRH_Ext field is employed, that is, Routing Type=6, and the SRH_Ext does not involve the processing regarding compatibility with the SRH header in the prior art.

During the SRH compression process, the following definitions are made:
(1) Define Flag=1 in SRH_Ext to indicate that the SID is currently a compressed SID, and define Flag=0 to indicate that the SID is currently a non-compressed SID.
(2) Define a first conversion function End.uzip (encoded as 0x77) of the critical node between the compressed SID and the non-compressed SID, to achieve the conversion of the type of the segment identifier to which the SL points from the compressed SID to the non-compressed SID. The code is as follows:

```
 IF (SRH.Flag == 1)
 Set SRH.Flag=0
 IF (SL>=10)
 Decrement SL by 2 //Assuming that the shortest 16-bit compressed
 SID is supported, the compressed SID here is 32-bit, so SL should be decremented by 2
 Update IPv6 DA with Segment_List[SL] //take the next
 non-compressed SID
 Forward the packet to IPv6 DA
 ELSE
 Report error //the next-hop node is not a non-compressed SID,
 and report an error;
```

(3) Define a second conversion function End.zip (encoded as 0x78) of the critical node between the non-compressed SID and the compressed SID, to achieve the conversion of the type of the segment identifier to which the SL points from the non-compressed SID to the compressed SID. The code is as follows:

```
 If (SRH.Flag == 0)
 Set SRH.Flag=1
 IF SL>10
 Decrement SL by 8
 Update IPv6 DA with Segment_List[SL] //take the next compressed
 SID
 Forward the packet to the new IPv6 DA.
```

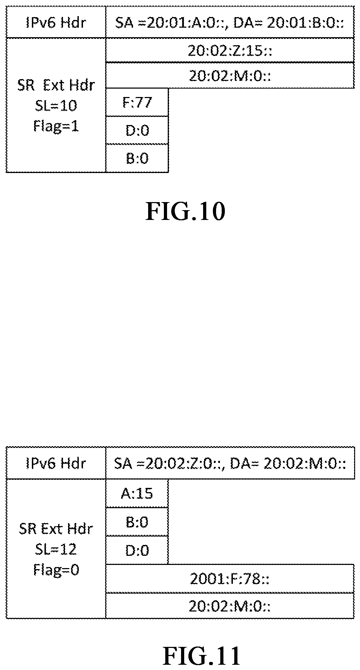

FIG. 10 is a structural schematic diagram of SRH_Ext in an A->Z service packet transmission direction. At node A, SRH_Ext as shown in FIG. 10 is used to represent an A-B-D-F-M-Z L2VPN service forwarding path, wherein node F employs F:77 to indicate that End.uzip operation is to be executed to achieve the conversion from the compressed SID to the non-compressed SID.

FIG. 11 is a structural schematic diagram of SRH_Ext in a Z->A service packet transmission direction. At node Z, the SRH_Ext as shown in FIG. 11 is used to represent a Z-M-F-D-B-A L2VPN service forwarding path, wherein node F employs F:78 to indicate that End.zip operation is to be executed to achieve the conversion from the non-compressed SID to the compressed SID.

Since this specific embodiment 2 employs a new Routing type (6), it is not necessary to consider the compatibility with the existing SRH processing. Assuming that the SRH_Ext supports a compressed SID with a minimum length of 16 bits, since the compressed SID here is 32 bits, the SL is decremented by 2 in the End operation for the compressed SID, and the SL is decremented by 8 in the End operation for the non-compressed SID.

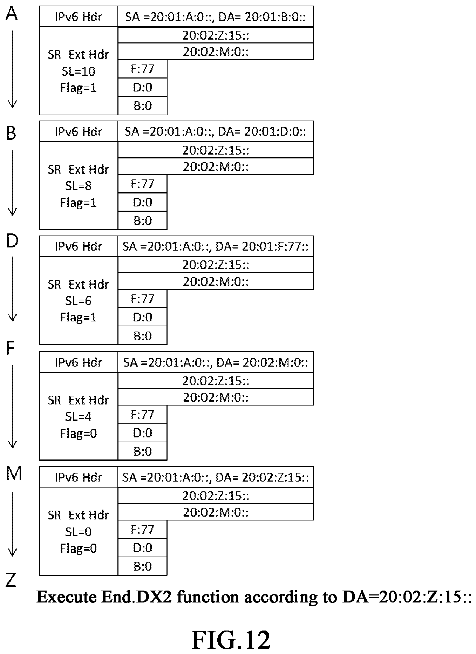

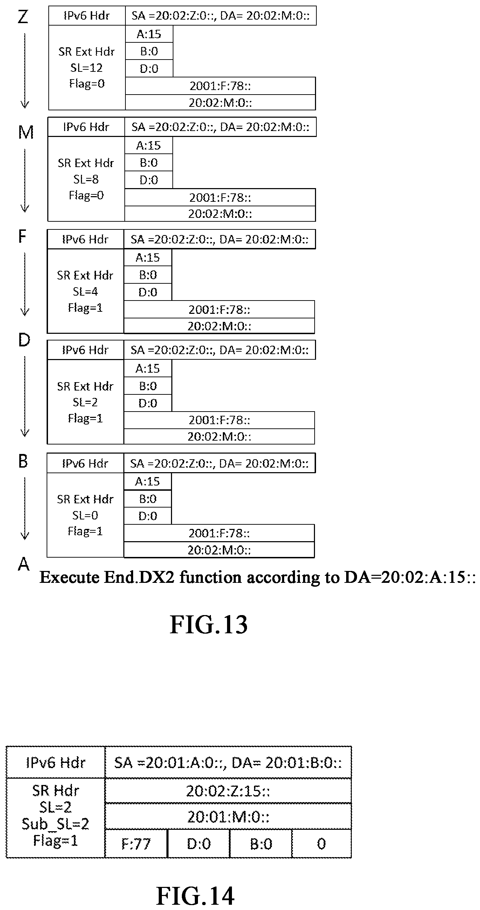

FIG. 12 shows the service processing flow in the A->Z service packet transmission direction. The segment routing path is A-B-D-F-M-Z, and the function of End.DX2 is executed according to DA=20:02:Z:15::. The service processing flow in the Z->A service packet transmission direction is shown in FIG. 13. The segment routing path is Z-M-F-D-B-A, and the function of End.DX2 is executed according to DA=20:02:A:15::.

### Embodiment 3

A networking topology of Embodiment 3 is as shown in FIG. 9. Currently, there is a L2VPN service. An A-B-D-F-M-Z SRv6 path needs to be created, and the path involves hybrid programming of compressed SID and non-compressed SID nodes. The A-G node s employ 32-bit compressed SIDs, and M, N, Z nodes are configured with 128-bit non-compressed SIDs. The difference between Embodiment 3 and Embodiment 2 is that the SRH in this Embodiment is the second segment routing header format, that is, no additional extension field is added, and the conventional SRH processing is compatible, namely, Routing Type=4.

During the SRH compression process, the following definitions are made:
(1) Define Flag=1 in SRH to indicate that the SID is currently a compressed SID, and Flag=0 to indicate that the SID is currently a non-compressed SID. At this time, the Flag seen at the node with the non-compressed SID (for example, the M node) is 0, which is the same as the conventional SRH.
(2) Define the first conversion function End.uzip (encoded as 0x77) of the critical node between the compressed SID and the non-compressed SID, to achieve the conversion of the type of the segment identifier to which the SL points from the compressed SID to the non-compressed SID. The code is as follows:

```
 IF(SRH.Flag == 1)
 Set SRH.Flag=0
 IF (SL>0)
 Decrement SL by 1
 Update IPv6 DA with Segment_List[SL]
 Forward the packet to the new DA
 ELSE
 Report error //the last SID, the conversion operation cannot be
 performed and report an error;
```

(3) Define the second conversion function End.zip (encoded as 0x78) of the critical node between the non-compressed SID and the compressed SID, to achieve the conversion of the type of the segment identifier to which the SL points from the non-compressed SID to the compressed SID. The code is as follows:

```
 IF (SRH.Flag == 0)
 Set SRH.Flag=1
 IF (SL>0)
 Decrement SL by 1
 Set Sub_SL by Segment_List[SL] //by judging the length of the
 reserved byte at the end of 128-bit, identify the number of compressed SIDs contained therein
 Update IPv6 DA with Segment_List[SL] [Sub_SL]
 Forward the packet to the new IPv6 DA
 ELSE
 Report error // the last SID, the conversion operation cannot be
 performed and report an error.
```

FIG. 14 is a structural schematic diagram of the SRH in an A->Z service packet transmission direction. At node A, the SRH shown in FIG. 14 is used to represent an A-B-D-F-M-Z L2VPN service forwarding path, wherein node F employs F:77 to indicate that End.uzip operation is to be executed to achieve the conversion from the compressed SID to the non-compressed SID.

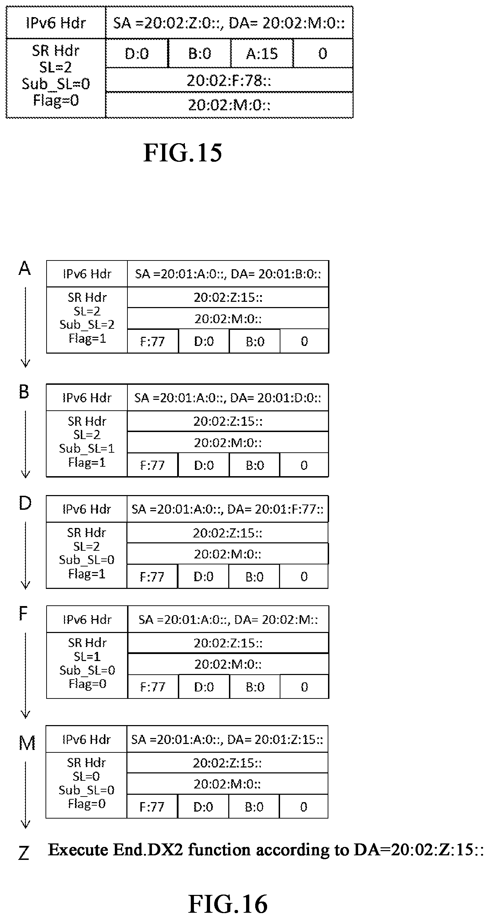

FIG. 15 is a structural schematic diagram of the SRH in a Z->A service packet transmission direction. At node Z, the SRH shown in FIG. 15 is used to represent a Z-M-F-D-B-A L2VPN service forwarding path, wherein node F is encoded in 128 bits, and employs F:78 to indicate that the End.zip operation is to be executed to achieve the conversion from non-compressed SID to compressed SID.

Since this Embodiment 3 employs a scheme compatible with the conventional SRH, i.e., Routing type=4, the compatible processing method includes: SL still indicates the number of SIDs in a 128-bit; when the compressed SID is used in the SRH, a plurality of compressed SIDs are combined together to occupy an integer multiple of 128 bits; if the integer multiple is not reached after the plurality of compressed SIDs are combined, the reserved bytes will be filled to make up the integer multiple of 128 bits. For example, as shown in FIG. 14, in the A->Z service packet transmission direction, there are only three compressed SIDs in the segment list. At this time, all 0 codes should be added thereafter to make up a complete 128-bit.

When the non-compressed SID is processed, the SL is decremented by 1 in the End operation. When the compressed SID is processed, the SL is decremented by 1 only when the processing of all compressed SIDs in a 128-bit is completed, wherein the number of unprocessed compressed segment identifiers within the 128-bit is recorded by setting the Sub_SL. The code is as follows:

```
 IF (SRH.Flag == 1)
 IF Sub_SL > 0 //there are still compressed SIDs in the current 128-bit that
 have not been processed
 Update IPv6 DA with Segment_List[SL][Sub_SL]
 Decrement Sub_SL by 1
 Forward the packet to the new IPv6 DA
 ELSE IF(Sub_SL) == 0 and (SL)>0 //the processing of all compressed SIDs
 in the current 128-bit is completed, and the compressed SIDs in the next 128-bit is taken for
 processing
 Decrement SL by 1
 Set Sub_SL by Segment_List[SL]
 Update IPv6 DA with Segment_List[SL][Sub_SL]
 Forward the packet to the new IPv6 DA
 ELSE
 Report error //if there is no next 128-bit, a service processing
 other than the End operation should be performed, with an error report.
```

It should be noted that when the compressed SID is processed, it is possible that the SL is already 0, but the Sub_SL is not 0. At this time, this indicates that the processing reaches the last 128-bit in the segment list, but there are still compressed segment identifiers that have not been processed, which should not be processed as the last hop at this time.

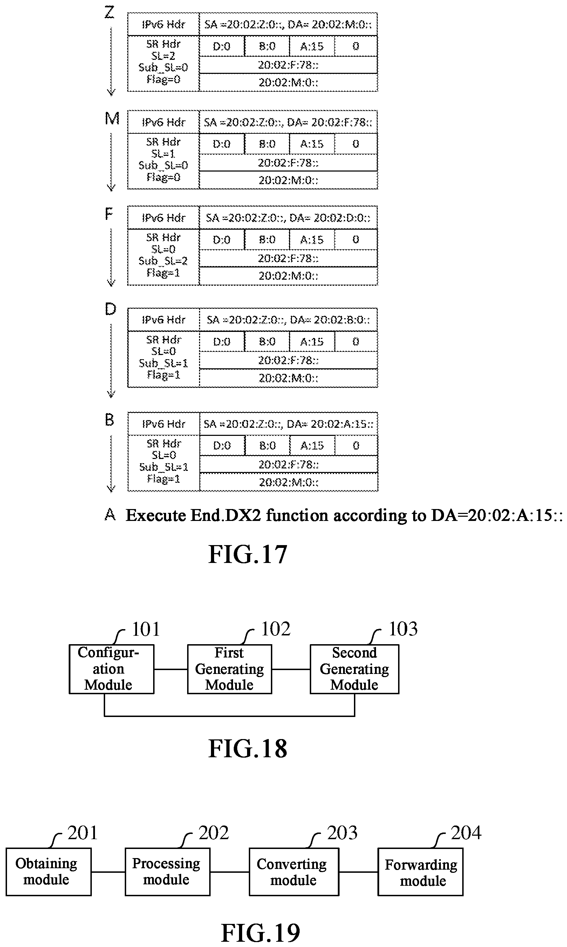

FIG. 16 shows the service processing flow in the A->Z service packet transmission direction. The segment routing path is A-B-D-F-M-Z, and the function of End.DX2 is executed according to DA=20:02:Z:15::. The service processing flow in the Z->A service packet transmission direction is shown in FIG. 17. The segment routing path is Z-M-F-D-B-A, and the function of End.DX2 is executed according to DA=20:02:A:15::.

Embodiments of the present disclosure provide an SRH compression method that simultaneously supports both the compressed SID format and non-compressed SID format in the SRH header of SRv6, so that the SRv6 forwarding path may include nodes represented by compressed SIDs or nodes represented by non-compressed SIDs, thereby extending the application scenarios of SRv6. A new flag field is defined to indicate whether the SID to which the SL points in the SRH is the compressed SID or the non-compressed SID, and a new function is defined to achieve the converting processing from the compressed SID to the non-compressed SID and from the non-compressed SID to the compressed SID in the SRv6 forwarding path.

Based on the same technical concept, an embodiment of the present disclosure further provides a segment routing header compression apparatus. As shown in FIG. 18, the segment routing header compression apparatus includes a configuration module 101, a first generation module 102 and a second generation module 103. The configuration module 101 is configured to configure a compressed segment identifier or a non-compressed segment identifier for each node on a segment routing path, and configure, for a critical node on the segment routing path, a compressed segment identifier additionally having a function of performing segment identifier type conversion on the segment identifier to which Segments Left (SL) points, the critical node being a node configured with the compressed segment identifier among two adjacent nodes configured with different types of segment identifiers.

The first generation module 102 is configured to generate a segment list, the segment list including the configured compressed segment identifier and the configured non-compressed segment identifier.

The second generation module 103 is configured to generate a segment routing header of a service packet, wherein the segment routing header of the service packet includes the segment list and a routing type field for indicating a segment routing header format, and the segment routing header format matches a format of the compressed segment identifier.

In some embodiments, the critical node is a node which is configured with a compressed segment identifier, and the next-hop node is configured with a non-compressed segment identifier. The function of performing segment identifier type conversion on the segment identifier to which the Segments Left (SL) points is a first conversion function, and the first conversion function is to convert the type of the segment identifier to which the SL points into the non-compressed segment identifier.

In some embodiments, the critical node is a node which is configured with a compressed segment identifier, and the previous hop node is configured with a non-compressed segment identifier. The function of performing segment identifier type conversion on the segment identifier to which the Segments Left (SL) points is a second conversion function, and the second conversion function is to convert the type of the segment identifier to which the SL points into the compressed segment identifier.

In some embodiments, the segment routing header of the service packet further includes a flag field for indicating the segment identifier type of the segment identifier to which the SL points; the first conversion function includes modifying a value of the flag field in the segment routing header of the received service packet to a value indicating the non-compressed segment identifier; and/or the second conversion function includes modifying the value of the flag field in the segment routing header of the received service packet to a value indicating the compressed segment identifier.

In some embodiments, the segment routing header of the service packet further includes an extension field, and the extension field is used to indicate a first segment routing header format, and performs the following functions after completion of the processing of a compressed segment identifier, decrementing a value of SL by n, where n is a ratio of a length of the compressed segment identifier to a length of the supported shortest compressed segment identifier, n being a positive integer; and after completion of the processing of a non-compressed segment identifier, decrementing the value of SL by m, where m is a ratio of a length of the non-compressed segment identifier to a length of the supported shortest compressed segment identifier, m being a positive integer.

In some embodiments, the routing type field is used to indicate a second segment routing header format, and the second segment routing header format includes: p compressed segment identifiers occupying bits with a length of t non-compressed segment identifiers, where t is a positive integer, p is a value obtained by rounding a ratio of a non-compressed segment identifier length to a compressed segment identifier length. If the total length of the p compressed segment identifiers is less than the total length of the t non-compressed segment identifiers, reserved bytes are used to pad a remaining length;

The routing type field is used to perform the following function: decrementing the SL by 1 after completion of the processing of all compressed segment identifiers within a non-compressed segment identifier length.

In some embodiments, the completion of the processing of all compressed segment identifiers within a non-compressed segment identifier length includes: all bits after the currently-processed segment identifier in the segment list being zero.

In some embodiments, the segment routing header of the service packet or the segment list further includes a counter field for recording a number of unprocessed compressed segment identifiers; and whenever the processing of a compressed segment identifier is completed, a value of the counter field is decremented by 1, where an initial value of the counter field is p; and the completion of the processing of all compressed segment identifiers within a non-compressed segment identifier length includes: the value of the counter field being zero.

Based on the same technical concept, an embodiment of the present disclosure also provides a service processing apparatus applied to nodes of a segment routing path, each node on the segment routing path being configured with a compressed segment identifier or a non-compressed segment identifier, a critical node on the segment routing path being configured with a compressed segment identifier additionally having a function of performing segment identifier type conversion on the segment identifier to which the SL points, the critical node being a node configured with the compressed segment identifier among two adjacent nodes configured with different types of segment identifiers. As shown in FIG. 19, the service processing apparatus includes: an obtaining module 201, a processing module 202, a converting module 203 and a forwarding module 204, wherein the obtaining module 204 is configured to obtain a segment list and a routing type field for indicating a segment routing header format from a segment routing header of the received service packet, the segment list including the configured compressed segment identifier and the configured non-compressed segment identifier.

The processing module 202 is configured to process a current segment identifier in the segment list, and modify the SL according to the routing type field.

The converting module 203 is configured to, if the current node is the critical node, convert segment identifier type of the segment identifier to which the SL points.

The forwarding module 204 is configured to forward the service packet to the next-hop node, the service packet carrying the type of the segment identifier to which the SL points.

In some embodiments, the critical node is a node which is configured with a compressed segment identifier, and the next-hop node is configured with a non-compressed segment identifier; and the converting module 23 is configured to modify the type of the segment identifier to which the SL points to the non-compressed segment identifier.

In some embodiments, the critical node is a node which is configured with a compressed segment identifier, and the previous-hop node is configured with a non-compressed segment identifier; and the converting module 203 is configured to modify the type of the segment identifier to which the SL points to the compressed segment identifier.

In some embodiments, the segment routing header of the service packet further includes a flag field for indicating the type of the segment identifier to which the SL points.

The obtaining module 201 is further configured to, before the converting module 203 converts the segment identifier type of the segment identifier to which the SL points, obtain the flag field from the segment routing header of the service packet.

The processing module 202 is configured to modify a value of the flag field to a value indicating a non-compressed segment identifier; and/or modify the value of the flag field to a value indicating a compressed segment identifier.

In some embodiments, the processing module 202 is configured to, when the segment routing header is a first segment routing header format, after completion of the processing of a compressed segment identifier, decrement the value of SL by n, where n is a ratio of a length of the compressed segment identifier to a length of the supported shortest compressed segment identifier, n being a positive integer; and after completion of the processing of a non-compressed segment identifier, decrement the value of SL by m, where m is a ratio of a length of the non-compressed segment identifier to a length of the supported shortest compressed segment identifier, m being a positive integer.

In some embodiments, the processing module 202 is configured to, when the segment routing header is a second segment routing header format, after completion of the processing of all compressed segment identifiers within a non-compressed segment identifier length, decrement the SL by 1; wherein p compressed segment identifiers occupy bits with a length of t non-compressed segment identifiers, where t is a positive integer, and p is a value obtained by rounding a ratio of a non-compressed segment identifier length to a compressed segment identifier length; and if the total length of the p compressed segment identifiers is less than the total length of the t non-compressed segment identifiers, reserved bytes are used to pad a remaining length.

In some embodiment, the completion of the processing of all compressed segment identifiers within a non-compressed segment identifier length includes: all bits after the currently-processed segment identifier in the segment list being zero.

In some embodiments, the segment routing header of the service packet or the segment list further includes a counter field for recording a number of unprocessed compressed segment identifiers; and whenever the processing of a compressed segment identifier is completed, a value of the counter field is decremented by 1, where an initial value of the counter field is p; and the completion of the processing of all compressed segment identifiers within a non-compressed segment identifier length includes the value of the counter field being zero.

An embodiment of the present disclosure further provides a computer device, including: one or more processors and a storage device; wherein one or more programs are stored on the storage device, and when executed by the one or more processors, cause the one or more processors to implement the segment routing header compression method provided by the above embodiments.

Embodiments of the present disclosure further provide a computer-readable medium on which a computer program is stored, wherein the computer program, when executed, implements the service processing method provided by the above embodiments.

Those having ordinary skills in the art may understand that all or some steps in the methods disclosed above, and functional modules/units in the apparatus may be implemented as software, firmware, hardware, and appropriate combinations thereof. In a hardware implementation, the division between functional modules/units mentioned in the above description does not necessarily correspond to the division of physical components; for example, one physical component may have multiple functions, or one function or step may be performed by several physical components in cooperation. Some or all physical components may be implemented as software executed by a processor, such as a central processing unit, digital signal processor or microprocessor, or as hardware, or as an integrated circuit, such as an application specific integrated circuit. Such software may be distributed on a computer-readable medium, which may include a computer storage medium (or a non-transitory medium), and a communication medium (or a transitory medium). As is known to those having ordinary skills in the art, the term computer storage medium includes both volatile and nonvolatile, removable and non-removable media implemented in any method or technology for storage of information such as computer readable instructions, data structures, program modules or other data. The computer storage medium includes, but is not limited to, RAM, ROM, EEPROM, flash memory or other memory technology, CD-ROM, digital versatile disk, DVD, or other optical disk storage, magnetic cartridge, magnetic tape, magnetic disk storage or other magnetic storage devices, or may be any other medium that is used to store desired information and accessed by a computer. In addition, as well known to those of ordinary skill in the art, communication media typically embodies computer readable instructions, data structures, program modules, or other data in a modulated data signal such as a carrier wave or other transport mechanism, and may include any information delivery media.

Example embodiments have been disclosed herein. Although specific terms are employed, they are only used and should only be construed in general descriptive senses and not for purposes of limitation. In some instances, it will be apparent to those skilled in the art that unless otherwise explicitly pointed out, features, characteristics and/or elements described in connection with a particular embodiment may be used alone or in combination with features, characteristics and/or elements described in connection with other embodiments. Accordingly, it will be appreciated by those having ordinary skill in the art that various changes in form and details may be made therein without departing from the scope of the present invention as set forth in the appended claims.

## Claims

1. A segment routing header compression method, including:
configuring a compressed segment identifier or a non-compressed segment identifier for each node on a segment routing path, and configuring, for a critical node in the segment routing path, a compressed segment identifier additionally having a function of performing segment identifier type conversion on the segment identifier to which Segments Left, SL, points, the critical node being a node configured with the compressed segment identifier among two adjacent nodes configured with different types of segment identifiers;
generating a segment list, the segment list including the configured compressed segment identifier and the configured non-compressed segment identifier;
generating a segment routing header of a service packet, wherein the segment routing header of the service packet includes the segment list and a routing type field for indicating a segment routing header format, and the segment routing header format matches a format of the compressed segment identifier.

2. The method according to claim 1, wherein the critical node is a node which is configured with the compressed segment identifier, and the next-hop node is configured with the non-compressed segment identifier, the function of the segment identifier type conversion on the segment identifier to which the SL points being a first conversion function, and the first conversion function being to convert the type of the segment identifier to which the SL points into the non-compressed segment identifier; and/or
the critical node is a node which is configured with the compressed segment identifier, and the previous hop node is configured with the non-compressed segment identifier, the function of performing segment identifier type conversion on the segment identifier to which the SL points being a second conversion function, and the second conversion function being to convert the type of the segment identifier to which the SL points into the compressed segment identifier.

3. The method according to claim 2, wherein the segment routing header of the service packet further includes a flag field for indicating the segment identifier type of the segment identifier to which the SL points; and
the first conversion function includes modifying a value of the flag field in the segment routing header of the received service packet to a value indicating the non-compressed segment identifier; and/or the second conversion function includes modifying the value of the flag field in the segment routing header of the received service packet to a value indicating the compressed segment identifier.

4. The method according to any of claims 1-3, wherein the segment routing header of the service packet further includes an extension field, and the extension field is used to indicate a first segment routing header format, and the following function is performed:
after completion of the processing of a compressed segment identifier, decrementing a value of SL by n, where n is a ratio of a length of the compressed segment identifier to a length of the supported shortest compressed segment identifier, n being a positive integer; and after completion of the processing of a non-compressed segment identifier, decrementing the value of SL by m, where m is a ratio of a length of the non-compressed segment identifier to a length of the supported shortest compressed segment identifier, m being a positive integer.

5. The method according to any of claims 1-3, wherein the routing type field is used to indicate a second segment routing header format, and the second segment routing header format includes: p compressed segment identifiers occupying bits with a length of the t non-compressed segment identifiers, where t is a positive integer, and p is a value obtained by rounding a ratio of a non-compressed segment identifier length to a compressed segment identifier length, and if the total length of the p compressed segment identifiers is less than the total length of the t non-compressed segment identifiers, reserved bytes are used to pad a remaining length; and
the routing type field is used to perform the following function: decrementing the SL by 1 after completion of the processing of all compressed segment identifiers within a non-compressed segment identifier length.

6. The method according to claim 5, wherein the completion of the processing of all compressed segment identifiers within a non-compressed segment identifier length includes all bits after the currently-processed segment identifier in the segment list being zero.

7. The method according claim 5, wherein the segment routing header of the service packet or the segment list further includes a counter field for recording a number of unprocessed compressed segment identifiers; and whenever the processing of a compressed segment identifier is completed, a value of the counter field is decremented by 1, where an initial value of the counter field is p; and
the completion of the processing of all compressed segment identifiers within a non-compressed segment identifier length includes the value of the counter field being zero.

8. A service processing method applied to nodes of a segment routing path, each node on the segment routing path being configured with a compressed segment identifier or a non-compressed segment identifier, a critical node on the segment routing path being configured with a compressed segment identifier additionally having a function of performing segment identifier type conversion on the segment identifier to which the SL points, the critical node being a node configured with a compressed segment identifier among two adjacent nodes configured with different types of segment identifiers, the method including:
obtaining a segment list and a routing type field for indicating a segment routing header format from a segment routing header of the received service packet, the segment list including the configured compressed segment identifier and the configured non-compressed segment identifier;
processing a current segment identifier in the segment list, and modifying the SL according to the routing type field;
if the current node is the critical node, performing segment identifier type conversion on the segment identifier to which the SL points; and
forwarding the service packet to the next-hop node, wherein the service packet carries the type of the segment identifier to which the SL points.

9. The method according to claim 8, wherein the critical node is a node which is configured with the compressed segment identifier, and the next-hop node is configured with the non-compressed segment identifier; and the performing segment identifier type conversion on the segment identifier to which the SL points includes: modifying the type of the segment identifier to which the SL points to the non-compressed segment identifier; and/or,
the critical node is a node which is configured with a compressed segment identifier, and the previous-hop node is configured with a non-compressed segment identifier; and the performing segment identifier type conversion on the segment identifier to which the SL points includes: modifying the type of the segment identifier to which the SL points to the compressed segment identifier.

10. The method according to claim 9, wherein the segment routing header of the service packet further includes a flag field for indicating the type of the segment identifier to which the SL points;
before the performing segment identifier type conversion on the segment identifier to which the SL points, the method further includes:
obtaining a flag field from the segment routing header of the service packet;
the modifying the type of the segment identifier to which the SL points to the non-compressed segment identifier includes: modifying a value of the flag field to a value indicating a non-compressed segment identifier; and/or
the modifying the type of the segment identifier to which the SL points to the compressed segment identifier includes: modifying the value of the flag field to a value indicating a compressed segment identifier.

11. The method according to any of claims 8-10, wherein the modifying the SL according to the routing type field includes:
if the segment routing header is a first segment routing header format, after completion of the processing of a compressed segment identifier, decrementing a value of SL by n, where n is a ratio of a length of the compressed segment identifier to a length of the supported shortest compressed segment identifier, n being a positive integer; and,
after completion of the processing of a non-compressed segment identifier, decrementing the value of SL by m, where m is a ratio of a length of the non-compressed segment identifier to a length of the supported shortest compressed segment identifier, m being a positive integer.

12. The method according to any of claims 8-10, wherein the modifying the SL according to the routing type field includes:
if the segment routing header is a second segment routing header format, after completion of the processing of all compressed segment identifiers in a non-compressed segment identifier length, decrementing the SL by 1; wherein p compressed segment identifiers occupy bits with a length of t non-compressed segment identifiers, where t is a positive integer, p is a value obtained by rounding a ratio of a non-compressed segment identifier length to a compressed segment identifier length; if the total length of the p compressed segment identifiers is less than the total length of the t non-compressed segment identifiers, reserved bytes are used to pad a remaining length.

13. The method according to claim 12, wherein the completion of the processing of all compressed segment identifiers within a non-compressed segment identifier length includes: all bits after the currently-processed segment identifier in the segment list being zero.

14. The method according to claim 12, wherein the segment routing header of the service packet or the segment list further includes a counter field for recording a number of unprocessed compressed segment identifiers; and whenever the processing of a compressed segment identifier is completed, a value of the counter field is decremented by 1, where an initial value of the counter field is p; and
the completion of the processing of all compressed segment identifiers within a non-compressed segment identifier length includes: the value of the counter field being zero.

15. A segment routing header compression apparatus, including a configuration module, a first generation module and a second generation module,
the configuration module configured to configure a compressed segment identifier or a non-compressed segment identifier for each node on a segment routing path, and configure, for a critical node on the segment routing path, a compressed segment identifier additionally having a function of performing segment identifier type conversion on the segment identifier to which Segments Left, SL, points, the critical node being a node configured with the compressed segment identifier among two adjacent nodes configured with different types of segment identifiers;
the first generation module configured to generate a segment list, the segment list including the configured compressed segment identifier and the configured non-compressed segment identifier; and
the second generation module configured to generate a segment routing header of a service packet, wherein the segment routing header of the service packet includes the segment list and a routing type field for indicating a segment routing header format, and the segment routing header format matches a format of the compressed segment identifier.

16. A service processing apparatus applied to nodes of a segment routing path, each node on the segment routing path being configured with a compressed segment identifier or a non-compressed segment identifier, a critical node on the segment routing path being configured with a compressed segment identifier additionally having a function of performing segment identifier type conversion on the segment identifier to which the SL points, the critical node being a node configured with the compressed segment identifier among two adjacent nodes configured with different types of segment identifiers; and the service processing apparatus including an obtaining module, a processing module, a converting module and a forwarding module,
the obtaining module is configured to obtain a segment list and a routing type field for indicating a segment routing header format from a segment routing header of the received service packet, the segment list including the configured compressed segment identifier and the configured non-compressed segment identifier;
the processing module configured to process a current segment identifier in the segment list, and modify the SL according to a routing type field;
the converting module configured to, if the current node is the critical node, convert segment identifier type of the segment identifier to which the SL points; and
the forwarding module configured to forward the service packet to the next-hop node, the service packet carrying the type of the segment identifier to which the SL points.

17. A computer device, including:
one or more processors;
a storage device on which one or more programs are stored,
the one or more programs, when executed by the one or more processors, cause the one or more processors to implement the segment routing header compression method according to any of claims 1-7 or the service processing method according to any of claims 8-14.

18. A computer-readable medium on which a computer program is stored, wherein the computer program, when executed, implements the segment routing header compression method according to any of claims 1-7 or the service processing method according to any of claims 8-14.
